# EUROPÄISCHE PATENTANMELDUNG

(11) **EP 4 841 216 A1**
(43) Veröffentlichungstag der Anmeldung: **18.11.2026**
(21) Anmeldenummer: 25176602.8
(22) Anmeldetag: 15.05.2025
(51) Int. Cl.: G01D 5/244, G01D 18/00, G01D 5/245

(54) **POSITIONSGEBER**

(71) Anmelder: SICK AG, 79183 Waldkirch (DE)
(72) Erfinder: Sellmer, Christian, 78166 Donaueschingen (DE); Hirmer, Katrin, 78166 Donaueschingen (DE)
(74) Vertreter: Manitz Finsterwald Patent- und Rechtsanwaltspartnerschaft mbB

(57) **Zusammenfassung**

Ein Positionsgeber zur Bestimmung einer Position eines Bauteils, das relativ zu einem anderen Bauteil bewegbar ist, umfasst eine Maßverkörperung, eine Abtasteinrichtung und eine elektronische Auswertungseinheit, die mit der Abtasteinrichtung in Signalverbindung steht und dazu ausgebildet ist, beruhend auf einem von der Abtasteinrichtung empfangenen Abtastsignal die Position des bewegbaren Bauteils zu bestimmen, wobei die Maßverkörperung wenigstens eine Codespur umfasst, wobei die Abtasteinrichtung zwei separate Empfangseinheiten umfasst, die um einen vorbestimmten Positionsversatz relativ zueinander versetzt sind und die zum Ausgeben jeweiliger Inkrementalsignale ausgebildet sind, und wobei die elektronische Auswertungseinheit dazu ausgebildet ist, eine Phasendifferenz der von den Empfangseinheiten ausgegebenen Inkrementalsignale zu bestimmen und anhand der bestimmten Phasendifferenz ein Zustandsänderungssignal zu erzeugen, das eine Änderung des mechanischen Zustands des Positionsgebers im Verlauf des Betriebs angibt.

## Beschreibung

Die Erfindung betrifft einen Positionsgeber zur Bestimmung einer Position eines Bauteils, das relativ zu einem anderen Bauteil bewegbar ist, mit einer an einem der Bauteile befestigbaren Maßverkörperung, einer am anderen Bauteil befestigbaren Abtasteinrichtung zum Abtasten der Maßverkörperung und einer elektronischen Auswertungseinheit, die mit der Abtasteinrichtung in Signalverbindung steht und dazu ausgebildet ist, beruhend auf wenigstens einem von der Abtasteinrichtung empfangenen Abtastsignal die Position des bewegbaren Bauteils zu bestimmen, wobei die Maßverkörperung wenigstens eine Codespur, insbesondere eine Inkremental-Codespur mit einem periodischen Codemuster, umfasst.

Solche Positionsgeber werden auch als Encoder bezeichnet und beispielsweise als Drehgeber dazu verwendet, die aktuelle Drehstellung und/oder die Anzahl von Umdrehungen und/oder die Drehgeschwindigkeit einer Welle zu ermitteln. Ein wichtiges Anwendungsfeld von Drehgebern sind so genannte Motor-Feedback-Systeme, bei welchen ein Drehgeber in einem Servomotor die Ist-Drehzahl der Motorwelle an die Regelung zurückmeldet. Positionsgeber der angegebenen Art können auch als Lineargeber zur Bestimmung einer linearen Position eines Bauteils ausgeführt sein, das gegenüber einem anderen Bauteil entlang einer Verschiebeachse verschiebbar ist.

Beim Abtasten kommen verschiedene Messprinzipien zum Einsatz, insbesondere optische, magnetische, kapazitive oder induktive. Beispielsweise kann die Maßverkörperung eine periodische Struktur aus transparenten und nichttransparenten Bereichen aufweisen und die Abtasteinrichtung kann eine Lichtquelle als Sender und eine lichtempfindliche Sensor-Anordnung als Empfänger aufweisen. Magnetische Drehgeber detektieren dagegen mit einem Hall-Sensor oder dergleichen entsprechende magnetische Strukturen der Maßverkörperung.

Inkremental-Codespuren sind im Gegensatz zu Absolut-Codespuren einfach auszuwerten. Es ist jedoch ein Referenzpunkt festzulegen, von dem aus die Impulszählung erfolgt. Das periodische Codemuster einer Inkremental-Codespur ist vorzugsweise einheitlich.

Durch Stöße, Schwingungen, Alterungseffekte und ähnliche Einflüsse kann es im Laufe der Zeit zu Änderungen der mechanischen Gegebenheiten eines Positionsgebers kommen. Solche Änderungen, beispielsweise an der Welle oder den zugehörigen Lagern, sind der Messgenauigkeit abträglich. Um das Auftreten von Schockereignissen und Vibrationen zu erkennen, können Positionsgeber mit Beschleunigungssensoren versehen sein. Dies ist jedoch kostspielig und erfordert einen entsprechenden Bauraum. Weiterhin ist die Erfassung von Beschleunigungen an der rotierenden Welle wegen der erforderlichen Versorgungsleitungen schwierig. Außerdem ist bei gängigen Beschleunigungssensoren die seitliche Auflösung vergleichsweise niedrig. Alterungseffekte sind mit Beschleunigungssensoren im Normalfall überhaupt nicht zu erfassen.

Es ist eine Aufgabe der Erfindung, mit einfachen Mitteln die Messgenauigkeit und Zuverlässigkeit von Positionsgebern auch bei Vorliegen betriebsbedingter mechanischer Beeinträchtigungen zu steigern.

Die Lösung erfolgt durch einen Positionsgeber mit den Merkmalen des Anspruchs 1.

Erfindungsgemäß umfasst die Abtasteinrichtung wenigstens zwei separate Empfangseinheiten, die um einen vorbestimmten Positionsversatz relativ zueinander versetzt sind und die zum Ausgeben jeweiliger Inkrementalsignale ausgebildet sind, wobei die elektronische Auswertungseinheit dazu ausgebildet ist, eine Phasendifferenz der von den wenigstens zwei separaten Empfangseinheiten ausgegebenen Inkrementalsignale zu bestimmen und anhand der bestimmten Phasendifferenz ein Zustandsänderungssignal zu erzeugen, das eine Änderung des mechanischen Zustands des Positionsgebers im Verlauf des Betriebs angibt.

Die Auswertung der Phasendifferenz der beiden versetzten Empfangseinheiten ermöglicht es, mechanische Zustandsänderungen des Positionsgebers zu ermitteln und nachfolgend während des Normalbetriebs zu berücksichtigen, zum Beispiel durch Korrekturmaßnahmen. Somit kann die Messgenauigkeit des Positionsgebers beträchtlich gesteigert werden. Dadurch, dass das Zustandsänderungssignal aus der Phasendifferenz abgeleitet wird und nicht etwa aus der absoluten Positionsdifferenz der beiden versetzten Empfangseinheiten, ist das Vorsehen einer Absolut-Codespur nicht zwingend erforderlich. Die Maßverkörperung kann jedoch zusätzlich zu einer oder mehreren Inkremental-Codespuren oder zu einer Feinpositions-Codespur eine Absolut-Codespur aufweisen. Die elektronische Auswertungseinheit kann hierbei dazu ausgebildet sein, eine absolute Position mittels einer kombinierten Auswertung eines absoluten Abtastsignals und eines inkrementellen Abtastsignals zu bestimmen. Die elektronische Auswertungseinheit kann ferner dazu ausgebildet sein, in einem Normalbetriebsmodus eine andere Codespur auszuwerten als in einem Kalibriermodus oder während der Initialisierung.

Die Maßverkörperung kann auch für eine Bestimmung einer Feinposition beruhend auf einer Absolut-Codespur ausgelegt sein.

Bevorzugt ist die elektronische Auswertungseinheit dazu ausgebildet, zum Erzeugen des Zustandsänderungssignals die bestimmte Phasendifferenz mit einem Erwartungswert zu vergleichen. Somit können jegliche Abweichungen vom erwarteten Zustand leicht erkannt werden. Der Erwartungswert kann bei der Inbetriebnahme oder auch beim wiederholten Einschalten des Positionsgebers bestimmt werden.

Die elektronische Auswertungseinheit kann dazu ausgebildet sein, zum Erzeugen des Zustandsänderungssignals eine Differenz zwischen der bestimmten Phasendifferenz und dem Erwartungswert zu bilden. Je größer die Differenz ausfällt, umso ausgeprägter ist die während des Betriebs eingetretene Zustandsänderung. Die Differenz kann direkt als Zustandsänderungssignal ausgegeben werden.

Gemäß einer Ausführungsform der Erfindung ist die elektronische Auswertungseinheit dazu ausgebildet, den Erwartungswert beruhend auf einer während eines Kalibriervorgangs erzeugten Wertetabelle mit einer Zuordnung von Positionen und Phasendifferenzen zu bestimmen. Zwischen den Stützpunkten kann eine Interpolation durchgeführt werden.

Die elektronische Auswertungseinheit kann dazu ausgebildet sein, zum Bestimmen des Erwartungswerts einen Satz von mehreren Phasendifferenzen zu filtern. Beispielsweise kann der Mittelwert oder der Median von mehreren, insbesondere zeitlich nacheinander bestimmten, Phasendifferenzen gebildet werden. Auf diese Weise kann eine zusätzliche Information bereitgestellt werden.

Gemäß einer Ausführungsform der Erfindung ist die elektronische Auswertungseinheit dazu ausgebildet, zum Erzeugen des Zustandsänderungssignals eine zeitliche Differenz oder Ableitung der bestimmten Phasendifferenz zu erzeugen. Die zeitliche Ableitung der Phasendifferenz ist ein günstiger Indikator für mechanische Änderungen unterschiedlicher Art.

Die elektronische Auswertungseinheit kann dazu ausgebildet sein, ein Warnsignal zu erzeugen, wenn das Zustandsänderungssignal einen Schwellwert überschreitet. Der Anwender kann den Positionsgeber überprüfen und gegebenenfalls reparieren oder austauschen, wenn das Warnsignal auftritt.

Vorzugsweise gibt das Zustandsänderungssignal eine Betriebsstörung wie einen Stoß oder eine Vibration, eine Änderung der Umgebungsbedingungen und/oder einen Verschleiß des Positionsgebers an.

Die elektronische Auswertungseinheit kann dazu ausgebildet sein, anhand der bestimmten Phasendifferenz die relative Lage zwischen der Codespur, insbesondere eines Referenzpunkts des periodischen Codemusters, und wenigstens einer der wenigstens zwei separaten Empfangseinheiten zu bestimmen. Somit können beispielsweise Verdrehungen und Verschiebungen der Empfangseinheiten relativ zur Inkremental-Codespur - und somit Auslenkungen des bewegbaren Bauteils - bestimmt und entsprechend berücksichtigt werden.

Gemäß einer weiteren Ausführungsform der Erfindung ist die elektronische Auswertungseinheit dazu ausgebildet, zum Erzeugen des Zustandsänderungssignals eine Amplitude, eine Frequenz und/oder eine Drift des Verlaufs der relativen Lage zu bestimmen. Insbesondere könnten Histogramm-Funktionen erzeugt werden.

Die elektronische Auswertungseinheit kann dazu ausgebildet sein, anhand des Verlaufs der relativen Lage eine Beschleunigung der Maßverkörperung und/oder des bewegbaren Bauteils zu bestimmen. Bei dieser Ausgestaltung werden also die Bewegungen des bewegbaren Bauteils direkt ermittelt. Die Beschleunigung kann insbesondere aus dem zeitlichen Verlauf der Auslenkungen unter Berücksichtigung der Kenndaten des Masse-Feder-Systems bestimmt werden.

Bevorzugt ist die elektronische Auswertungseinheit dazu ausgebildet, die Phasendifferenz während des Betriebs des Positionsgebers wiederholt, insbesondere kontinuierlich, zu bestimmen. Somit kann der Zustand des Positionsgebers und/oder der zugehörigen Maschinenanordnung fortlaufend überwacht werden, was als "condition monitoring" bezeichnet wird.

Gemäß einer Ausführungsform der Erfindung ist der Positionsgeber als Drehgeber zur Bestimmung einer Winkelposition eines Bauteils ausgeführt, das relativ zu einem anderen Bauteil um eine Rotationsachse drehbar ist, wobei die wenigstens zwei separaten Empfangseinheiten bezüglich der Rotationsachse um einen vorbestimmten Winkelversatz relativ zueinander versetzt sind.

Gemäß einer Ausführungsform der Erfindung beträgt der vorbestimmte Winkelversatz wenigstens 0,5° und höchstens 130°, bevorzugt wenigstens 5° und höchstens 70°, weiter bevorzugt wenigstens 10° und höchstens 50° und besonders bevorzugt wenigstens 15° und höchstens 30°. Dies hat sich hinsichtlich der Bestimmung von Zustandsänderungen anhand der Phasendifferenz als besonders günstig erwiesen. Eine spezielle Ausgestaltung der Erfindung sieht vor, dass der Winkelversatz etwa 20° beträgt.

Gemäß einer alternativen Ausführungsform der Erfindung ist der Positionsgeber als Lineargeber zur Bestimmung einer linearen Position eines Bauteils ausgeführt, das gegenüber einem anderen Bauteil entlang einer Verschiebeachse verschiebbar ist.

Die Erfindung betrifft auch ein Verfahren zum Bestimmen einer Position eines Bauteils, das relativ zu einem anderen Bauteil bewegbar, insbesondere um eine Rotationsachse drehbar, ist, wobei an einem der Bauteils eine Maßverkörperung und am anderen Bauteil eine Abtasteinrichtung befestigt ist, insbesondere mittels eines wie vorstehend beschriebenen Positionsgebers, mit den Schritten:
Abtasten der Maßverkörperung mittels der Abtasteinrichtung und Bestimmen der Position des bewegbaren Bauteils beruhend auf wenigstens einem von der Abtasteinrichtung empfangenen Abtastsignal,
wobei die Maßverkörperung wenigstens eine Codespur, insbesondere eine Inkremental-Codespur mit einem periodischen Codemuster, umfasst und wobei die Abtasteinrichtung wenigstens zwei separate Empfangseinheiten umfasst, die um einen vorbestimmten Positionsversatz relativ zueinander versetzt sind und die zum Ausgeben jeweiliger Inkrementalsignale ausgebildet sind,
Bestimmen einer Phasendifferenz der von den wenigstens zwei separaten Empfangseinheiten ausgegebenen Inkrementalsignale und
Erzeugen eines Zustandsänderungssignals, das eine Änderung des mechanischen Zustands des Positionsgebers im Verlauf des Betriebs angibt, anhand der bestimmten Phasendifferenz.

Durch eine Auswertung der Phasendifferenz der beiden versetzten Empfangseinheiten können auftretende mechanische Zustandsänderungen ermittelt und berücksichtigt werden, wodurch die Messgenauigkeit und die Zuverlässigkeit des Positionsgebers verbessert wird.

Bevorzugt wird das Bestimmen der Phasendifferenz und das Erzeugen des Zustandsänderungssignals wiederholt, insbesondere kontinuierlich, durchgeführt, um eine dauerhafte Zustandsüberwachung vorzusehen.

Weiterbildungen der Erfindung sind auch den abhängigen Ansprüchen, der Beschreibung sowie den beigefügten Zeichnungen zu entnehmen.

Die Erfindung wird nachfolgend beispielhaft unter Bezugnahme auf die Zeichnungen beschrieben.
- Fig. 1: ist eine vereinfachte Draufsicht auf einen erfindungsgemäßen Drehgeber.
- Fig. 2: veranschaulicht das Überwachen eines Zustands des Drehgebers gemäß Fig. 1.

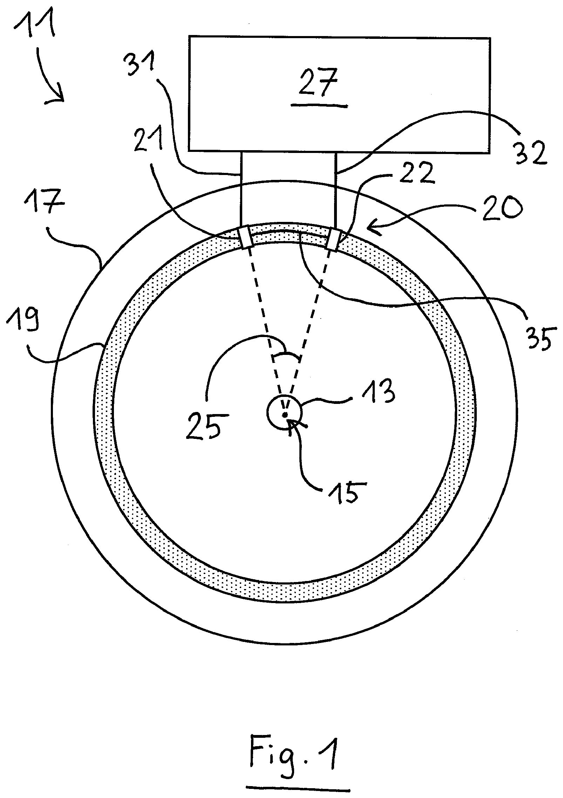

Der in Fig. 1 gezeigte, gemäß einer Ausführungsform der Erfindung gestaltete Drehgeber 11 umfasst eine Welle 13, die um eine Rotationsachse 15 drehbar in einem nicht dargestellten Gehäuse gelagert ist und die für eine mechanische Kopplung mit einer Motorwelle oder dergleichen vorgesehen ist oder selbst eine Motorwelle ist, beispielsweise für den Einsatz in einem Motor-Feedback-System. Mit der Welle 13 antriebswirksam verbunden ist eine Maßverkörperung 17 in Form einer Codescheibe. Auf diese ist eine kreisförmige Inkremental-Codespur 19 mit einem gleichmäßigen periodischen Codemuster aufgebracht. Die Inkremental-Codespur 19 kann durch eine periodische Struktur aus transparenten und nichttransparenten Bereichen gebildet sein. Konzentrisch zu der Inkremental-Codespur 19 kann eine Absolut-Codespur vorgesehen sein, was in Fig. 1 jedoch nicht dargestellt ist.

Zum Abtasten der Codespuren weist der Drehgeber 11 eine nicht mit der Welle 13 mitrotierende Abtasteinrichtung 20 auf, die zwei separate Leseköpfe oder Empfangseinheiten 21, 22 umfasst. Wie gezeigt sind die Empfangseinheiten 21, 22 bezogen auf die Rotationsachse 15 um einen Winkelversatz 25 relativ zueinander versetzt angeordnet. Vorzugsweise beträgt der Winkelversatz 25 wenigstens 2° und höchstens 80°. Die Empfangseinheiten 21, 22 stehen mit einer elektronischen Auswertungseinheit 27 des Drehgebers 11 in Signalverbindung und geben während des Betriebs desselben jeweilige Inkrementalsignale 31, 32 aus. Grundsätzlich könnte auch die Abtasteinrichtung 20 mit der Welle 13 antriebswirksam verbunden sein und die Maßverkörperung 17 so montiert sein, dass sie nicht mit der Welle 13 mitrotiert.

Die elektronische Auswertungseinheit 27 ist dazu ausgebildet, in einem Normalbetriebsmodus beruhend auf einem der Inkrementalsignale 31, 32 oder auf beiden Inkrementalsignalen 31, 32 und gegebenenfalls auf einem zusätzlichen Absolutwertsignal die Winkelposition der Maßverkörperung 17 und somit der Welle 13 zu bestimmen.

Schocks, Vibrationen und ähnliche mechanische Störungen gehen mit einer Veränderung der Phasenbeziehung der beiden Inkrementalsignale 31, 32 einher. Beispielsweise können sich die Empfangseinheiten 21, 22 der Abtasteinrichtung 20 bei einer seitlichen Verschiebung der Welle 13 an unterschiedlichen radialen Positionen der Inkremental-Codespur 19 befinden. Da die Bogenlänge 35 zwischen den beiden Empfangseinheiten 21, 22 fest ist, der Periodenabstand sich jedoch in radialer Richtung ändert, ergibt sich eine von der Verschiebung abhängige Änderung der Phasenbeziehung der Inkrementalsignale 21, 22. Bei einer Auslenkung in Richtung einer Verbindungslinie zwischen den beiden Empfangseinheiten 21, 22 kommt es sowohl zu einer Änderung der erfassten Winkelposition als auch zu einer Änderung der Positionsdifferenz.

Damit während des Betriebs des Drehgebers 11 der mechanische Zustand der Systemkomponenten überwacht wird, ist die elektronische Auswertungseinheit 27 dazu ausgebildet, die Phasendifferenz der Inkrementalsignale 31, 32 zu bestimmen und darauf beruhend ein Zustandsänderungssignal zu erzeugen. Das Zustandsänderungssignal kann zur Kompensation von Messungenauigkeiten durch mechanische Belastungen herangezogen werden.

Alternativ oder zusätzlich zu einer solchen Kompensation kann die elektronische Auswertungseinheit 27 dazu ausgebildet sein, ein Warnsignal zu erzeugen, wenn das Zustandsänderungssignal einen Schwellwert überschreitet, also das Ausmaß der Zustandsänderung zu groß wird. Bei Auftreten des Warnsignals kann der Drehgeber 11 repariert oder ausgetauscht werden.

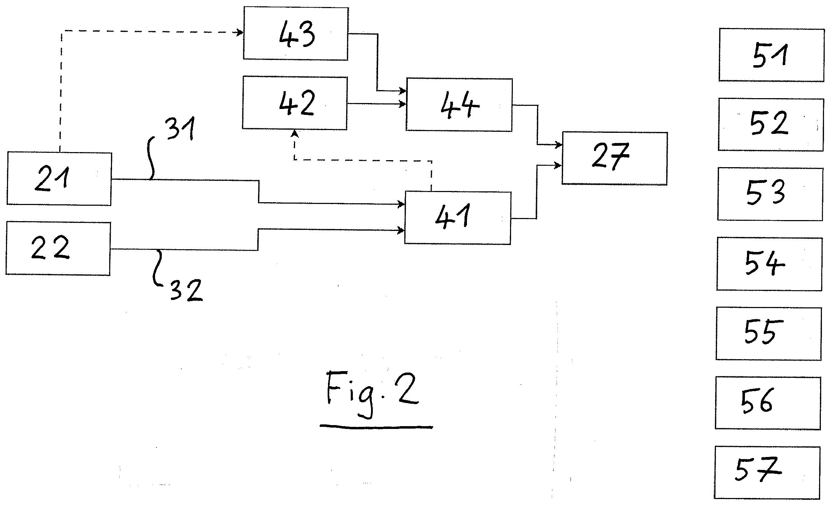

Das Erzeugen des Zustandsänderungssignals wird nachfolgend unter Bezugnahme auf Fig. 2 näher beschrieben.

Die Phasendifferenz 41 zwischen den von den Empfangseinheiten 21, 22 ausgegebenen Inkrementalsignalen 31, 32 wird bestimmt. Ferner wird ein Filter 42 dazu verwendet, einen Median oder Mittelwert mehrerer Phasendifferenzen zu berechnen. Ferner wird eine Korrekturtabelle 43 erstellt. Der Filter 42 und die Korrekturtabelle 43 werden beispielsweise bei der Inbetriebnahme des Drehgebers 11 dazu verwendet, einen Erwartungswert 44 zu bestimmen. Die elektronische Auswertungseinheit 27 vergleicht im Normalbetriebsmodus fortlaufend die aktuelle Phasendifferenz 41 mit dem Erwartungswert 44. Auf Grundlage des Ergebnisses des Vergleichs erzeugt die elektronische Auswertungseinheit 27 das Zustandsänderungssignal. Je größer das Zustandsänderungssignal ist, umso ausgeprägter ist die während des Betriebs eingetretene mechanische Zustandsänderung.

Die elektronische Auswertungseinheit 27 kann dazu ausgebildet sein, verschiedene Zusatzfunktionen bereitzustellen, insbesondere eine Abweichungswarnung 51, eine Ereigniserfassung 52 mit einer Zuordnung zur entsprechenden Winkelposition oder zum entsprechenden Zeitpunkt, eine Häufigkeitsanalyse 53, eine Amplitudenermittlung 54, einer Schwingungsfrequenzanalyse 55, einer Drift-Erfassung 56 und einer Richtungsbestimmung 57 der Auslenkung.

Die Erfindung ermöglicht das kontinuierliche Überwachen des Zustands eines Drehgebers 11 hinsichtlich unterschiedlicher mechanischer Betriebsstörungen wie Stöße, Vibrationen, Degradationen und/oder Änderungen der Umgebungsbedingungen.

Die Erfindung eignet sich im Übrigen nicht nur wie beschrieben für einen Drehgeber 11, sondern auch für einen Lineargeber oder Linearencoder.

### Bezugszeichenliste:

- 11: Drehgeber
- 13: Welle
- 15: Rotationsachse
- 17: Maßverkörperung
- 19: Inkremental-Codespur
- 20: Abtasteinrichtung
- 21: Empfangseinheit
- 22: Empfangseinheit
- 25: Winkelversatz
- 27: Auswertungseinheit
- 31: Inkrementalsignal
- 32: Inkrementalsignal
- 35: Bogenlänge
- 41: Phasendifferenz
- 42: Filter
- 43: Korrekturtabelle
- 44: Erwartungswert
- 51: Abweichungswarnung
- 52: Ereigniserfassung
- 53: Häufigkeitsanalyse
- 54: Amplitudenermittlung
- 55: Schwingungsfrequenzanalyse
- 56: Drift-Erfassung
- 57: Richtungsbestimmung

## Patentansprüche

1. Positionsgeber (11) zur Bestimmung einer Position eines Bauteils (13), das relativ zu einem anderen Bauteil bewegbar ist, mit einer an einem der Bauteile (13) befestigbaren Maßverkörperung (17), einer am anderen Bauteil befestigbaren Abtasteinrichtung (20) zum Abtasten der Maßverkörperung (17) und einer elektronischen Auswertungseinheit (27), die mit der Abtasteinrichtung (20) in Signalverbindung steht und dazu ausgebildet ist, beruhend auf wenigstens einem von der Abtasteinrichtung (20) empfangenen Abtastsignal die Position des bewegbaren Bauteils (13) zu bestimmen, wobei die Maßverkörperung (17) wenigstens eine Codespur, insbesondere eine Inkremental-Codespur (19) mit einem periodischen Codemuster, umfasst, wobei die Abtasteinrichtung (20) wenigstens zwei separate Empfangseinheiten (21, 22) umfasst, die um einen vorbestimmten Positionsversatz (25) relativ zueinander versetzt sind und die zum Ausgeben jeweiliger Inkrementalsignale (31, 32) ausgebildet sind,
und wobei die elektronische Auswertungseinheit (27) dazu ausgebildet ist, eine Phasendifferenz (41) der von den wenigstens zwei separaten Empfangseinheiten (21, 22) ausgegebenen Inkrementalsignale (31, 32) zu bestimmen und anhand der bestimmten Phasendifferenz (41) ein Zustandsänderungssignal zu erzeugen, das eine Änderung des mechanischen Zustands des Positionsgebers (11) im Verlauf des Betriebs angibt.

2. Positionsgeber nach Anspruch 1,
wobei die elektronische Auswertungseinheit (27) dazu ausgebildet ist, zum Erzeugen des Zustandsänderungssignals die bestimmte Phasendifferenz (41) mit einem Erwartungswert (44) zu vergleichen.

3. Positionsgeber nach Anspruch 2,
wobei die elektronische Auswertungseinheit (27) dazu ausgebildet ist, zum Erzeugen des Zustandsänderungssignals eine Differenz zwischen der bestimmten Phasendifferenz (41) und dem Erwartungswert (44) zu bilden.

4. Positionsgeber nach Anspruch 2 oder 3,
wobei die elektronische Auswertungseinheit (27) dazu ausgebildet ist, den Erwartungswert (44) beruhend auf einer während eines Kalibriervorgangs erzeugten Wertetabelle (43) mit einer Zuordnung von Positionen und Phasendifferenzen (41) zu bestimmen.

5. Positionsgeber nach einem der vorstehenden Ansprüche,
wobei die elektronische Auswertungseinheit (27) dazu ausgebildet ist, zum Bestimmen des Erwartungswerts (44) einen Satz von mehreren Phasendifferenzen (41) zu filtern.

6. Positionsgeber nach einem der vorstehenden Ansprüche,
wobei die elektronische Auswertungseinheit (27) dazu ausgebildet ist, zum Erzeugen des Zustandsänderungssignals eine zeitliche Differenz oder Ableitung der bestimmten Phasendifferenz (41) zu erzeugen.

7. Positionsgeber nach einem der vorstehenden Ansprüche,
wobei die elektronische Auswertungseinheit (27) dazu ausgebildet ist, ein Warnsignal zu erzeugen, wenn das Zustandsänderungssignal einen Schwellwert überschreitet.

8. Positionsgeber nach einem der vorstehenden Ansprüche,
wobei das Zustandsänderungssignal eine Betriebsstörung wie einen Stoß oder eine Vibration, eine Änderung der Umgebungsbedingungen und/oder einen Verschleiß des Positionsgebers (11) angibt.

9. Positionsgeber nach einem der vorstehenden Ansprüche,
wobei die elektronische Auswertungseinheit (27) dazu ausgebildet ist, anhand der bestimmten Phasendifferenz (41) die relative Lage zwischen der Codespur (19), insbesondere eines Referenzpunkts des periodischen Codemusters, und wenigstens einer der wenigstens zwei separaten Empfangseinheiten (21, 22) zu bestimmen.

10. Positionsgeber nach Anspruch 9,
wobei die elektronische Auswertungseinheit (27) dazu ausgebildet ist, zum Erzeugen des Zustandsänderungssignals eine Amplitude, eine Frequenz und/oder eine Drift des Verlaufs der relativen Lage zu bestimmen.

11. Positionsgeber nach Anspruch 9 oder 10,
wobei die elektronische Auswertungseinheit (27) dazu ausgebildet ist, anhand des Verlaufs der relativen Lage eine Beschleunigung der Maßverkörperung (17) und/oder des drehbaren Bauteils (13) zu bestimmen.

12. Positionsgeber nach einem der vorstehenden Ansprüche,
wobei die elektronische Auswertungseinheit (27) dazu ausgebildet ist, die Phasendifferenz (41) während des Betriebs des Positionsgebers (11) wiederholt, insbesondere kontinuierlich, zu bestimmen.

13. Positionsgeber nach einem der vorstehenden Ansprüche,
wobei der Positionsgeber (11) als Drehgeber zur Bestimmung einer Winkelposition eines Bauteils (13) ausgeführt ist, das relativ zu einem anderen Bauteil um eine Rotationsachse (15) drehbar ist, und wobei die wenigstens zwei separaten Empfangseinheiten (21, 22) bezüglich der Rotationsachse (15) um einen vorbestimmten Winkelversatz (25) relativ zueinander versetzt sind.

14. Positionsgeber nach Anspruch 13,
wobei der vorbestimmte Winkelversatz (25) wenigstens 0,5° und höchstens 130°, bevorzugt wenigstens 5° und höchstens 70°, weiter bevorzugt wenigstens 10° und höchstens 50° und besonders bevorzugt wenigstens 15° und höchstens 30°, beträgt.

15. Verfahren zum Bestimmen einer Position, insbesondere einer Winkelposition, eines Bauteils (13), das relativ zu einem anderen Bauteil bewegbar, insbesondere um eine Rotationsachse (15) drehbar, ist, wobei an einem der Bauteile (13) eine Maßverkörperung (17) und am anderen Bauteil eine Abtasteinrichtung (20) befestigt ist, insbesondere mittels eines Positionsgebers (11) nach einem der vorstehenden Ansprüche, mit den Schritten:
Abtasten der Maßverkörperung (17) mittels der Abtasteinrichtung (20) und Bestimmen der Position des bewegbaren Bauteils (13) beruhend auf wenigstens einem von der Abtasteinrichtung (20) empfangenen Abtastsignal, wobei die Maßverkörperung (17) wenigstens eine Codespur, insbesondere eine Inkremental-Codespur (19) mit einem periodischen Codemuster, umfasst und wobei die Abtasteinrichtung (20) wenigstens zwei separate Empfangseinheiten (21, 22) umfasst, die um einen vorbestimmten Positionsversatz (25) relativ zueinander versetzt sind und die zum Ausgeben jeweiliger Inkrementalsignale (31, 32) ausgebildet sind,
Bestimmen einer Phasendifferenz (41) der von den wenigstens zwei separaten Empfangseinheiten (21, 22) ausgegebenen Inkrementalsignale (31, 32) und
Erzeugen eines Zustandsänderungssignals, das eine Änderung des mechanischen Zustands des Positionsgebers (11) im Verlauf des Betriebs angibt, anhand der bestimmten Phasendifferenz (41).
